# EUROPÄISCHE PATENTSCHRIFT

(11) **EP 3 615 334 B1**
(45) Veröffentlichungstag und Bekanntmachung des Hinweises auf die Patenterteilung: **20.10.2021**
(21) Anmeldenummer: 18717642.5
(22) Anmeldetag: 23.04.2018
(51) Int. Cl.: B29C 64/118, B33Y 80/00, B33Y 70/00, C08G 18/73, C08G 18/76, C08G 18/32, C08G 18/10, C08G 18/42, C08L 75/04, C08L 75/06, B29K 75/00

(54) **ADDITIVES FERTIGUNGSVERFAHREN MIT MEHREREN THERMOPLASTISCHEN POLYURETHANEN**
ADDITIVE PRODUCTION METHOD WITH MULTIPLE THERMOPLASTIC POLYURETHANES
PROCÉDÉ DE FABRICATION ADDITIVE À PARTIR DE PLUSIEURS POLYURÉTHANES THERMOPLASTIQUES

(30) Priorität: 24.04.2017 EP 17167679
(43) Veröffentlichungstag der Anmeldung: 04.03.2020
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); KESSLER, Michael, 50969 Köln (DE); REICHERT, Peter, 41541 Dormagen (DE); WAGNER, Roland, 51375 Leverkusen (DE); DEGIORGIO, Nicolas, 47807 Krefeld (DE); KÜNZEL, Jonas, 51381 Leverkusen (DE); LIU, Ting, 50668 Köln (DE)
(74) Vertreter: Levpat
(86) Internationale Anmeldenummer: PCT/EP2018/060303
(87) Internationale Veröffentlichungsnummer: WO 2018/197396

(56) Entgegenhaltungen:
- WO-A1-2017/015072
- US-A1- 2016 333 152

## Beschreibung

Die vorliegende Erfindung betrifft ein Verfahren zur Herstellung eines Gegenstands, umfassend die Schritte:
I) Bereitstellen eines zumindest teilweise auf eine Temperatur oberhalb seiner Glasübergangstemperatur erwärmten Aufbaumaterials auf einen Träger, so dass eine Lage des Aufbaumaterials erhalten wird, welche einem ersten ausgewählten Querschnitt des Gegenstands entspricht;
II) Bereitstellen eines zumindest teilweise auf eine Temperatur oberhalb seiner Glasübergangstemperatur erwärmten Aufbaumaterials auf eine zuvor bereitgestellte Lage des Aufbaumaterials, so dass eine weitere Lage des Aufbaumaterials erhalten wird, welche einem weiteren ausgewählten Querschnitt des Gegenstands entspricht und welche mit der zuvor bereitgestellten Lage verbunden ist; und
III) Wiederholen des Schritts II), bis der Gegenstand gebildet ist.

Der Einsatz von mehreren Materialien in einem additiven Fertigungsverfahren, auch als Multimaterial-3D-Druck bezeichnet, ist im Stand der Technik unter anderem im Zusammenhang mit später zu entfernenden Stützstrukturen bekannt. So können der herzustellende Gegenstand selbst aus einem nicht wasserlöslichen Material und die Stützstrukturen aus einem wasserlöslichen Material aufgebaut sein. Durch Herauslösen der Stützstrukturen wird dann der eigentliche Gegenstand erhalten.

Im Multimaterial-3D-Druck können einerseits verschiedene Materialien zu einem Aufbaumaterial vermischt werden. So ist die Mischung von unterschiedlich gefärbtem Aufbaumaterial Gegenstand der Patentanmeldung WO 2015/073301 A1. Offenbart wird ein kontinuierlich arbeitender dreidimensionaler Drucker (3D-Drucker), umfassend eine oder mehrere Patronen mit einem darin enthaltenen Aufbaumaterial und einen Mischer, der mit jeder Patrone verbunden ist, einen einzelnen Druckkopf, der mit einem Auslass des Mischkopfs verbunden ist. Das in der Patrone enthaltene Aufbaumaterial wird zu dem Mischkopf und dem einzelnen Druckkopf transportiert, um ein kontinuierlich gefärbtes Objekt zu erhalten.

US 2015/0093465 A1 hingegen beschreibt ein additives Fertigungssystem und eine solche Vorrichtung enthaltend ein Materialauftragssystem mit einem Extruder zum Auftragen von Materialien, wobei der Extruder zwei oder mehr Materialeingänge sowie eine Mischkammer und einen Ausgang aufweist. Ferner liegt eine mit dem Extruder gekoppelte Steuerungseinheit vor, welche die Zufuhrraten der in der Mischkammer zu mischenden Materialien dynamisch ändern kann, bevor die Materialien aus dem Ausgang des Extruders austreten. Die Steuerungseinheit kombiniert einen Sollwert für die Volumenflussrate des Materials aus dem Ausgang des Extruders mit einem Mischungsverhältnis, um die Zufuhrraten der Materialien zu bestimmen. Das System kann einen Filamentantrieb enthalten, um die thermoplastischen Materialien in Filamentform den Materialeingängen zuzuführen. Die Steuerungseinheit kann während des Betriebs des Filamentantriebs das Mischungsverhältnis dynamisch verändern, um eine oder mehrere Eigenschaften des aus dem Ausgang des Extruders austretenden Materials zu bestimmen.

Eine andere Variante des Multimaterial-3D-Drucks ist der Einsatz von mehreren Aufbaumaterialien neben- oder übereinander.

WO 2016/108154 A1 offenbart ein Verfahren zur Herstellung von individualisierten Immobilisationselementen zur nicht-invasiven Immobilisierung und/oder Mobilisierung wenigstens eines Segments eines Körperteils eines Patienten in einer vorbestimmten Position relativ zu einer Referenz und/oder einer vorbestimmten Konfiguration. Das Verfahren umfasst die Schritte (i) Bereitstellen eines Datensatzes umfassend ein dreidimensionales Bild einer äußeren Kontur wenigstens eines Teils des zu immobilisierenden und/oder zu mobilisierenden Segments des Körperteils; (ii) Herstellen wenigstens eines Teils des Immobilisierungselements mittels schnellem Herstellen einer Form auf Basis des besagten Datensatzes aus einem polymeren Material enthaltend ein thermoplastisches Polymer mit einem Schmelzpunkt von 100 °C oder weniger, wobei das Polymermaterial einen Keimbildner zur Verbesserung der Kristallisation des thermoplastischen Polymers enthält.

WO 2017/015072 A1 offenbart ein Verfahren zur Herstellung eines medizinischen Gegenstandes aus TPU in einem additiven Fertigungsverfahren. Als Stützmaterial kann ein anderes TPU eingesetzt werden.

US 2016/333152 A1 betrifft ein Verfahren für die Fabrikation eines dreidimensionalen Gegenstands, umfassend den Schritt des: (I) Betreibens eines Systems für die Feststoff-Freiform-Fabrikation eines Gegenstands, wobei das System eine Feststoff-Freiform-Fabrikationsvorrichtung umfasst, die kleine Perlen von Konstruktionsmaterialien auf regulierte Weise absetzt, um den dreidimensionalen Gegenstand zu bilden. Die Konstruktionsmaterialien umfassen ein thermoplastisches Polyurethan umfassen, das von (a) einer Polyisocyanatkomponente, (b) einer Polyolkomponente und (c) einer wahlweisen Kettenverlängerungsmittelkomponente abgeleitet ist. Das resultierende thermoplastische Polyurethan weist eine Kristallisationstemperatur über 80 °C auf. Das resultierende thermoplastische Polyurethan behält mehr als 20 % seines Scherspeichermoduls bei 100 °C im Vergleich mit seinem Scherspeichermodul bei 20 °C bei, wobei der Modul ASTM D5279 entsprechend gemessen wird.

Wenn unterschiedliche thermoplastische Materialien in einem Multimaterial-3D-Druckverfahren eingesetzt werden sollen, sollten die Verarbeitungsparameter während des Druckvorgangs einen Bereich umfassen, der sämtliches eingesetzte Material betrifft. So sollte zum Beispiel die Verarbeitungstemperatur derart gewählt sein, dass sämtliches Material schmilzt. Im Fall von Polyamiden liegen die Schmelzpunkte des Materials jedoch zum Teil weit auseinander: PA 6.6 (260 °C), PA 6.10 (240 °C), PA 6 (220 °C), PA 6.12 (218 °C), PA 11 (198 °C) und PA 12 (178 °C). Somit sind einer Feinabstimmung des Aufbaumaterials durch Mischen verschiedener Polyamide gewisse Grenzen gesetzt.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein additives Herstellungsverfahren anzugeben, in dem die mechanischen und/oder chemischen Eigenschaften in verschiedenen Bereichen des damit hergestellten Gegenstandes variiert werden können bei gleichzeitig möglichst hoher stoffschlüssiger Verbindung der einzelnen Bereiche innerhalb des Gegenstands. Weiterhin liegt eine Aufgabe der Erfindung darin, einen in sich möglichst homogenen Gegenstand mit Bereichen bereitzustellen, die unterschiedliche mechanische oder chemische Eigenschaften aufweisen. Des Weiteren war eine Aufgabe der Erfindung, einen Gegenstand möglichst kosteneffizient und/oder individualisiert und/oder ressourcenschonend herstellen zu können.

Erfindungsgemäß gelöst wird die Aufgabe durch ein Verfahren mit den Merkmalen des Anspruchs 1. Vorteilhafte Weiterbildungen sind in den Unteransprüchen angegeben.

Erfindungsgemäß ist vorgesehen, dass der Gegenstand mittels eines additiven Fertigungsverfahrens ("3D-Drucken") aus einem Aufbaumaterial hergestellt wird. Das additive Fertigungsverfahren ist hierbei aus der Gruppe der Schmelzschichtungsverfahren (Fused Filament Fabrication, FFF oder Fused Deposition Modeling, FDM) ausgewählt.

Der Begriff "Schmelzschichtungsverfahren" bezeichnet ein Fertigungsverfahren aus dem Bereich der additiven Fertigung, mit dem ein Werkstück schichtweise beispielsweise aus einem schmelzfähigen Kunststoff aufgebaut wird. Der Kunststoff kann mit oder ohne weitere Zusätze wie Fasern eingesetzt werden. Maschinen für das FDM/FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 200 mm/s. Die Schichtdicke liegt je nach Anwendungsfall in einem Bereich von 0,025 und 1,25 mm.

Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 80 °C bis 420 °C, kurzfristig auch noch höher bis zu etwa 450 °C, betragen. Es ist zudem möglich, den Substrattisch zu beheizen, beispielsweise auf 20 °C bis 250 °C. Hierdurch kann ein zu schnelles Abkühlen der aufgetragenen Schicht verhindert werden, sodass eine weitere, hierauf aufgetragene Schicht sich ausreichend mit der ersten Schicht verbindet.

Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für das Auftragen durchgeführt werden.

Die einzelnen Filamente, welche aufgetragen werden, können einen Durchmesser von ≥ 30 µm bis ≤ 2000 µm aufweisen, bevorzugt ≥ 40 µm bis ≤ 1000 µm und besonders bevorzugt ≥ 50 µm bis ≤ 500 µm.

Die unterscheidende Eigenschaft des ersten und des zweiten Aufbaumaterials kann beispielsweise ausgewählt sein aus der Gruppe bestehend aus: Shore-Härte (DIN ISO 7619-1), Reißfestigkeit (DIN 53504, 200 mm/min), Reißdehnung (DIN 53504, 200 mm/min), Spannung bei 100 % Dehnung (DIN 53504, 200 mm/min), Spannung bei 300 % Dehnung (DIN 53504, 200 mm/min), Rückprallelastizität (ISO 4662) oder einer Kombination aus mindestens zwei hiervon.

Thermoplastische Polyurethane (TPU) haben den Vorteil, dass Materialien in einem vergleichsweise kleinen Fenster der Verarbeitungsbedingungen, insbesondere der Verarbeitungstemperatur, mit einer großen Bandbreite an mechanischen und/oder chemischen Eigenschaften zur Verfügung stehen. So lassen sich unterschiedliche thermoplastische Polyurethane mit einer Shore-Härte (DIN ISO 7619-1) von ≥ 40A bis ≤ 85D in einem Temperaturbereich von ≥ 190 °C bis ≤ 250 °C gemeinsam verarbeiten, wobei der erhaltene Gegenstand eine makroskopische Shore-Härte aufweist, welche zwischen der größten und der kleinsten Härte der eingesetzten Polyurethane liegen kann. Dieses ermöglicht eine feine Abstimmung der mechanischen Eigenschaften, welche selbstverständlich auch im herzustellenden Gegenstand selbst räumlich variieren können. Bedingt durch die chemische Kompatibilität der Polyurethane untereinander kann im erfindungsgemäßen Verfahren eine Kontaktzone zwischen Lagen unterschiedlichen Aufbaumaterialien in Form eines Polymer-Blends entstehen.

Ein so erhaltener Polymer-Blend lässt sich von klassischen Polymerblends insofern unterscheiden, dass Grenzbereiche entstehen, die sich nicht nur physikalisch als Mischung, sondern auch chemisch von den ursprünglich eingesetzten Materialien unterscheiden. In Polyurethanen als Vertreter der Additionspolymere können bei den eingesetzten Verarbeitungstemperaturen reversible Öffnungen die Urethangruppen sich reversibel öffnen und Umurethanisierungen auftreten. Wenn beispielsweise zwei nebeneinander Lagen aufgeschmolzen werden und die eine Lage aus einem ersten Polyurethan auf der Basis eines ersten Isocyanats und eines ersten Polyols aufgebaut ist und die andere Lage aus einem zweiten Polyurethan auf der Basis eines zweiten Isocyanats und eines zweiten Polyols aufgebaut ist, können durch Umurethanisierungen in der Kontaktzone auch Polyurethane auf der Basis des ersten Isocyanats und des zweiten Polyols sowie auf der Basis des zweiten Isocyanats und des ersten Polyols vorliegen.

Für die Herstellung der verschiedenen TPU geeignete Polyisocyanate können symmetrische Polyisocyanate, nicht-symmetrische Polyisocyanate oder deren Mischungen sein. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind 2,2,4-Trimethylhexamethylendiisocyanat, Ethylethylendiisocyanat, nicht-symmetrische Isomere des Dicyclohexylmethandiisocyanat (H₁₂-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-lsocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethan-diisocyanat (MDI), 2,4- und 2,6-Toluylendiisocyanat (TDI) sowie Derivate der aufgeführten Diisocyanate, insbesondere dimerisierte oder trimerisierte Typen.

Bevorzugt sind 4,4'-MDI, HDI oder eine Mischung enthaltend IPDI und HDI als Polyisocyanatkomponente.

Die Polyolkomponente kann ein Polyol enthalten, das ausgewählt ist aus der Gruppe: Polyetherpolyole, Polyesterpolyole, Polyetheresterpolyole, Polycarbonatpolyole oder einer Kombination aus mindestens zwei hiervon.

Gegebenenfalls können bei der Reaktion zu den Polyurethanen weiterhin Diole des Molekulargewichtsbereichs von ≥ 62 bis ≤ 600 g/mol als Kettenverlängerungsmittel eingesetzt werden.

Neben den thermoplastischen Polyurethan-Polymeren können die eingesetzten Aufbaumaterialien jeweils noch weitere Additive wie Füllstoffe, Stabilisatoren und dergleichen enthalten. Der Gesamtgehalt an Additiven im einzelnen Aufbaumaterial kann beispielsweise ≥ 0,1 Gewichts-% bis ≤ 50 Gewichts-%, bevorzugt ≥ 1 Gewichts-% bis ≤ 30 Gewichts-%, betragen.

Das erfindungsgemäße Verfahren kann innerhalb eines Bauraums durchgeführt werden und die Temperatur des Bauraums ist bevorzugt ≤ 140 °C, mehr bevorzugt ≤ 130 °C und besonders bevorzugt ≤ 120 °C.

Neben der Bauraumtemperatur kann die Temperatur des Bauuntergrunds im erfindungsgemäßen Verfahren, auf der der Druck der ersten Lage erfolgt, eine Rolle spielen. Die Temperatur des Baugrunds ist in diesem Zusammenhang bevorzugt größer als die Glasübergangstemperatur von mindestens einem der Aufbaumaterialien.

Es ist erfindungsgemäß weiterhin vorgesehen, dass wenigstens einmal Schritt II) mit dem ersten Aufbaumaterial durchgeführt wird und wenigstens einmal Schritt II) mit dem zweiten Aufbaumaterial durchgeführt wird. Auf diese Weise kann ein Verbund unterschiedlicher Lagen aufgebaut werden. Wie oft Schritt II) mit dem ersten Aufbaumaterial und wie oft Schritt II) mit dem zweiten Aufbaumaterial durchgeführt werden ist grundsätzlich nicht festgelegt. Es ist ebenfalls dem Anwender des Verfahrens freigestellt, die individuelle Abfolge von Schichten mit dem ersten und mit dem zweiten Aufbaumaterial zu bestimmen. Dieses kann sich nach der Funktion des herzustellenden Gegenstandes richten.

Es ist auch möglich, mehr als zwei voneinander verschiedene Aufbaumaterialien einzusetzen. So kann in den einzelnen Schritten II) das Aufbaumaterial jeweils aus einem ersten Aufbaumaterial, einem zweiten Aufbaumaterial und einem dritten Aufbaumaterial ausgewählt sein, die jeweils voneinander verschieden sind. Dann wird Schritt II) wenigstens einmal mit dem ersten, einmal mit dem zweiten und einmal mit dem dritten Aufbaumaterial durchgeführt. Analog kann in den einzelnen Schritten II) das Aufbaumaterial jeweils aus einem ersten Aufbaumaterial, einem zweiten Aufbaumaterial, einem dritten Aufbaumaterial und einem vierten Aufbaumaterial ausgewählt sein, die jeweils voneinander verschieden sind. Dann wird Schritt II) wenigstens einmal mit dem ersten, einmal mit dem zweiten, einmal mit dem dritten und einmal mit dem vierten Aufbaumaterial durchgeführt. Auch für diese mehr als zwei unterschiedlichen Aufbaumaterialien gilt, dass sie sich in einem Merkmal wie dem Schmelzpunkt, der Kristallinität oder einer sonstigen messbare Eigenschaft unterscheiden.

Es ist auch möglich, dass eine Schicht des herzustellenden Körpers aus mehr als einem Aufbaumaterial aufgebaut wird. Dann liegen beispielsweise erstes und zweites Aufbaumaterial nebeneinander vor.

Erfindungsgemäß unterscheiden sich das erste und das zweite Aufbaumaterial voneinander durch ihre Shore-Härte (DIN ISO 7619-1).

Erfindungsgemäß beträgt die Differenz der Shore-Härten (DIN ISO 7619-1) zwischen erstem und zweitem Aufbaumaterial ≥ 5A bis ≤ 55A und/oder ≥ 5D bis ≤ 40D.

Insbesondere können das erste Aufbaumaterial ein thermoplastisches Polyurethan-Material mit einer Shore-Härte (DIN ISO 7619-1) von ≥ 40A bis ≤ 85D umfassen und das zweite Aufbaumaterial ein thermoplastische Polyurethan-Material eine Shore-Härte (DIN ISO 7619-1) von ≥ 40A bis ≤ 85D umfassen, wobei die Differenz der Shore-Härten zwischen erstem und zweitem Aufbaumaterial ≥ 5A bis ≤ 55A und/oder ≥ 5D bis ≤ 40D beträgt.

Ein Beispiel ist ein erstes Aufbaumaterial mit einer Shore-Härte (DIN ISO 7619-1) von ≥ 40A bis ≤ 80A und ein zweites Aufbaumaterial mit einer Shore-Härte (DIN ISO 7619-1) von ≥ 70A bis ≤ 95A. Die Differenz der Shore-Härten zwischen erstem und zweitem Aufbaumaterial beträgt ≥ 5A bis ≤ 55A.

Ein weiteres Beispiel ist ein erstes Aufbaumaterial mit einer Shore-Härte (DIN ISO 7619-1) von ≥ 65A bis ≤ 75A und ein zweites Aufbaumaterial mit einer Shore-Härte (DIN ISO 7619-1) von ≥ 80A bis ≤ 95A. Die Differenz der Shore-Härten zwischen erstem und zweitem Aufbaumaterial beträgt ≥ 10A bis ≤ 30A.

In einer bevorzugten Ausführungsform der Erfindung unterscheiden sich das erste und das zweite Aufbaumaterial voneinander durch ihre Reißdehnung (DIN 53504, 200 mm/min).

Vorzugsweise beträgt die Differenz der Reißdehnungen (DIN 53504, 200 mm/min) zwischen erstem und zweitem Aufbaumaterial ≥ 50 Prozentpunkte bis ≤ 700 Prozentpunkte.

Insbesondere können das erste Aufbaumaterial eine Reißdehnung (DIN 53504, 200 mm/min) von ≥ 100% bis ≤ 800% aufweisen und das zweite Aufbaumaterial eine Reißdehnung (DIN 53504, 200 mm/min) von ≥ 100% bis ≤ 800% aufweisen, wobei die Differenz der Reißdehnungen zwischen erstem und zweitem Aufbaumaterial ≥ 50 Prozentpunkte bis ≤ 200 Prozentpunkte beträgt.

Ein Beispiel ist ein erstes Aufbaumaterial mit einer Reißdehnung (DIN 53504, 200 mm/min) von ≥ 400% bis ≤ 600% und ein zweites Aufbaumaterial mit einer Reißdehnung (DIN 53504, 200 mm/min) von ≥ 200% bis ≤ 400%. Die Differenz der Reißdehnungen zwischen erstem und zweitem Aufbaumaterial beträgt ≥ 50 Prozentpunkte bis ≤ 200 Prozentpunkte.

Ein weiteres Beispiel ist ein erstes Aufbaumaterial mit einer Reißdehnung (DIN 53504, 200 mm/min) von ≥ 450% bis ≤ 550% und ein zweites Aufbaumaterial mit einer Reißdehnung (DIN 53504, 200 mm/min) von ≥ 250% bis ≤ 350%. Die Differenz der Reißdehnungen zwischen erstem und zweitem Aufbaumaterial beträgt ≥ 100 Prozentpunkte bis ≤ 200 Prozentpunkte.

In einer weiteren bevorzugten Ausführungsform weisen das erste oder das zweite Aufbaumaterial hinsichtlich der schmelzbaren Anteile einen Schmelzbereich (DSC, differential scanning calorimetry; 2. Aufheizung mit Aufheizrate 20 K/min.) auf, welcher im Temperaturbereich von ≥ 30 °C bis ≤ 240 °C liegt. Der Schmelzbereich liegt vorzugsweise in einem Temperaturbereich von ≥ 40 °C bis ≤ 130 °C und mehr bevorzugt von ≥ 45 °C bis ≤ 120 °C. Bei der DSC-Messung zur Bestimmung des Schmelzbereichs wird das Material folgendem Temperaturzyklus unterworfen: 1 Minute bei -60 °C, danach Aufheizen auf 200 °C mit 20 Kelvin/Minute, dann Abkühlen auf -60 °C mit 20 Kelvin/Minute, dann 1 Minute bei -60 °C, dann Aufheizen auf 200 °C mit 20 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, ≤ 20 °C, bevorzugt ≤ 10 °C und mehr bevorzugt ≤ 5 °C beträgt.

In einer weiteren bevorzugten Ausführungsform der Erfindung umfasst die Herstellung des Gegenstands mittels des additiven Fertigungsverfahrens die Schritte:
- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

Der erste Schritt dieser Ausführungsform des Verfahrens betrifft den Aufbau der ersten Lage auf einen Träger. Anschließend wird der zweite Schritt so lange ausgeführt, in dem auf zuvor aufgetragene Lagen des Aufbaumaterials weitere Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen.

In einer weiteren bevorzugten Ausführungsform der Erfindung ist wenigstens eines der eingesetzten Aufbaumaterialien ein thermoplastisches Polyurethan-Elastomer (TPE). Beispielsweise können das erste und das zweite Aufbaumaterial ein TPE sein.

In einer weiteren bevorzugten Ausführungsform der Erfindung umfasst wenigstens eines der eingesetzten Aufbaumaterialien thermoplastisches Polyurethan-Elastomer, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C bis ≤ 100 °C aufweist. Insbesondere kann die Polyolkomponente ein Polyesterpolyol aufweisen, welches einen Stockpunkt (No Flow Point, ASTM D5985) von ≥ 25 °C bis ≤ 90 °C, vorzugsweise ≥ 35 °C bis ≤ 80 °C, mehr bevorzugt ≥ 35 °C bis ≤ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Beispiele für Polyesterpolyole, welche solch einen Stockpunkt aufweisen können, sind Reaktionsprodukte von Phthalsäure, Phthalsäureanhydrid oder symmetrischen α,ω-C₄- bis C₁₀-Dicarbonsäuren mit einem oder mehreren C₂- bis C₁₀-Diolen. Sie weisen bevorzugt ein zahlenmittleres Molekulargewicht Mₙ von ≥ 400 g/mol bis ≤ 6000 g/mol auf. Geeignete Diole sind insbesondere Monoethylenglykol, 1,4-Butandiol, 1,6-Hexandiol und Neopentylglykol. Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI oder 4,4'-MDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist ferner bevorzugt, dass diese Polyesterpolyole eine OH-Zahl (DIN 53240) von ≥ 25 bis ≤ 170 mg KOH/g und/oder eine Viskosität (75 °C, DIN 51550) von ≥ 50 bis ≤ 5000 mPas aufweisen. Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von ≥ 1:4 bis ≤ 4:1 erhältlich ist und welches ein zahlenmittleres Molekulargewicht Mₙ (GPC, gegen Polystyrol-Standards) von ≥ 4000 g/mol bis ≤ 6000 g/mol aufweist. Solch ein Polyurethan kann einen Betrag der komplexen Viskosität |*η**| (bestimmt durch Viskosimetriemessung in der Schmelze mit einem Platte/Platte-Oszillationsviskosimeter gemäß ISO 6721-10 bei 100 °C und einer Scherrate von 1/s) von ≥ 4000 Pas bis ≤ 160000 Pas aufweisen.

Ein weiteres Beispiel für ein geeignetes Polyurethan ist:
1. Weitgehend lineare, endständige Hydroxylgruppen aufweisende Polyesterpolyurethane wie in EP 0192946 A1 beschrieben, hergestellt durch Umsetzung von
   a) Polyesterdiolen eines über 600 liegenden Molekulargewichts und gegebenenfalls
   b) Diolen des Molekulargewichtsbereichs von 62 bis 600 g/mol als Kettenverlängerungsmittel mit
   c) aliphatischen Diisocyanaten
   unteEinhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den unter 1. genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den unter 1. genannten Polyesterpolyurethanen ist ferner bevorzugt, dass die Komponente c) IPDI und weiterhin HDI enthält.

In den unter 1. genannten Polyesterpolyurethanen ist ferner bevorzugt, dass bei ihrer Herstellung als Komponente b) Alkandiole, ausgewählt aus der Gruppe bestehend aus 1,2-Dihydroxyethan, 1,3-Dihydroxypropan, 1,4-Dihydroxybutan, 1,5-Dihydroxypentan, 1,6-Dihydroxyhexan und beliebigen Gemischen dieser Diole, in einer Menge von bis zu 200 Hydroxyläquivalentprozent, bezogen auf die Komponente a), mitverwendet worden sind.

Es ist ferner möglich, dass das thermoplastische Elastomer nach Erwärmen auf 100 °C und Abkühlen auf 20 °C bei einer Abkühlrate von 4 °C/min in einem Temperaturintervall von 25 °C bis 40 °C für ≥ 1 Minute (bevorzugt ≥ 1 Minute bis ≤ 30 Minuten, mehr bevorzugt ≥ 10 Minuten bis ≤ 15 Minuten), ein Speichermodul G' (bestimmt bei der jeweils herrschenden Temperatur mit einem Platte/Platte-Oszillationsviskosimeter gemäß ISO 6721-10 bei einer Scherrate von 1/s) von ≥ 100 kPa bis ≤ 1 MPa auf und nach Abkühlen auf 20 °C und Lagerung für 20 Minuten ein Speichermodul G' (bestimmt bei 20 °C mit einem Platte/Platte-Oszillationsviskosimeter gemäß ISO 6721-10 bei einer Scherrate von 1/s) von ≥ 10 MPa aufweist.

In einer weiteren bevorzugten Ausführungsform der Erfindung umfasst wenigstens eines der eingesetzten Aufbaumaterialien ein thermoplastisches Polyurethan-Polymer, welches aus der Reaktion einer Diphenylmethandiisocyanat und/oder dessen NCO-terminiertes Reaktionsprodukt mit einem Polyol enthaltenden NCO-Komponente und einer 1,4-Butandiol enthaltenden Polyolkomponente erhalten wurde.

Die NCO-Komponente für die Herstellung des genannten TPU-Materials kann somit MDI und/oder ein MDI-basiertes, mit NCO-Gruppen terminiertes Prepolymer enthalten. Für die Prepolymere können als Reaktionspartner mit MDI zu ihrer Bildung beispielsweise Polyetherpolyole und/oder Polyesterpolyole herangezogen werden.

Die Polyolkomponente für die Herstellung dieses TPU-Materials kann ausschließlich 1,4-Butandiol (BDO) enthalten. Dieses ist insbesondere dann vorgesehen, wenn MDI-basierte Prepolymere einer Kettenverlängerung mit BDO unterzogen werden sollen. Ein Gemisch von BDO mit polymeren Polyolen wie Polyetherpolyolen und/oder Polyesterpolyolen wird dann vorteilhaft eingesetzt, wenn in einem Einstufenverfahren diese Polyolkomponente direkt mit MDI oder HDI umgesetzt wird. Ohne auf eine Theorie festgelegt zu sein wird angenommen, dass aus der Reaktion von MDI oder den Termini der entsprechenden Prepolymere mit BDO die Hartsegmente der Polyurethane gebildet werden, welche den Schmelzpunkt oder den Schmelzbereich des TPU bestimmen. Die Weichsegmente des TPU leiten sich dann aus polymeren Polyolen ab. Thermoplastische Polyurethan-Materialien mit Hartsegmenten auf der Basis von MDI/BDO können beispielsweise einen Schmelzpunkt oder einen Schmelzbereich (DSC-Messung) im Bereich von ≥ 170 °C bis ≤ 240 °C aufweisen.

In einer weiteren bevorzugten Ausführungsform der Erfindung umfasst wenigstens eines der eingesetzten Aufbaumaterialien ein thermoplastisches Polyurethan-Polymer, welches aus der Reaktion einer 1,6-Hexamethylendiisocyanat enthaltenden NCO-Komponente und/oder dessen NCO-terminiertes Reaktionsprodukt mit einem Polyol und einer 1,4-Butandiol und/oder 1,6-Hexandiol enthaltenden Polyolkomponente erhalten wurde.

Die NCO-Komponente für die Herstellung dieses TPU-Materials kann somit HDI und/oder ein HDI-basiertes, mit NCO-Gruppen terminiertes Prepolymer enthalten. Für die Prepolymere können als Reaktionspartner mit HDI zu ihrer Bildung beispielsweise Polyetherpolyole und/oder Polyesterpolyole herangezogen werden.

Die Polyolkomponente für die Herstellung dieses TPU-Materials kann ausschließlich HDO enthalten. Dieses ist insbesondere dann vorgesehen, wenn ein HDI-basiertes Prepolymer einer Kettenverlängerung mit HDO unterzogen werden sollen. Ein Gemisch von HDO mit polymeren Polyolen wie Polyetherpolyolen und/oder Polyesterpolyolen wird dann vorteilhaft eingesetzt, wenn in einem Einstufenverfahren diese Polyolkomponente direkt mit HDI umgesetzt wird.

Ohne auf eine Theorie festgelegt zu sein wird angenommen, dass bei diesen Materialien der Schmelzpunkt oder der Schmelzbereich des TPU durch die Weichsegmente im Polymer, insbesondere Polyesterpolyol-basierte Weichsegmente, bestimmt wird. Thermoplastische Polyurethan-Materialien mit Hartsegmenten auf der Basis von HDI/BDO können beispielsweise einen Schmelzpunkt oder einen Schmelzbereich (DSC-Messung) im Bereich von ≥ 150 °C bis ≤ 190 °C aufweisen.

In einer weiteren bevorzugten Ausführungsform der Erfindung wird das Verfahren in einer Kammer durchgeführt und die Temperatur innerhalb der Kammer beträgt ≤ 50 °C. Vorzugsweise ist die Temperatur ≥ 0 °C bis ≤ 50 °C, mehr bevorzugt ≥ 5 °C bis ≤ 40 °C und besonders bevorzugt ≥ 10 °C bis ≤ 35 °C. Bei einer vergleichsweise niedrigen Bauraumtemperatur ist es möglich, Bauteilverformungen ("Warping") durch räumlich unterschiedliche Kristallisationsvorgänge zu vermindern oder zu unterdrücken. Dadurch, dass bei einer Temperatur von unter 100 °C gearbeitet wird, lassen sich Blasenbildungen im Bauteil durch Wasserdampf vermeiden. Somit kann das Polymer größere Mengen an Wasser enthalten als bei höheren Temperaturen in der Kammer.

Ebenso kann das Ausmaß der Sublimation von organischen Verbindungen in die Kammer verringert werden. Dann können auch Weichmacher und Lösungsmittel enthaltende Polymere verarbeitet werden. Eine speziell getrocknete oder inerte Atmosphäre in der Kammer ist nicht erforderlich. Ebenso wird der Explosionsschutz in der Kammer verbessert, wenn bei einer Temperatur unterhalb des Flammpunkts der in der Kammer vorliegenden Substanzen gearbeitet wird.

In einer weiteren bevorzugten Ausführungsform der Erfindung wird wenigstens eines der eingesetzten Aufbaumaterialien durch eine Düse ausgetragen, welche eine Temperatur von ≤ 250 °C aufweist.

Besonders bevorzugt ist die Kombination, dass das Verfahren in einer Kammer durchgeführt wird, die Temperatur innerhalb der Kammer ≤ 50 °C beträgt und dass wenigstens eines der eingesetzten Aufbaumaterialien durch eine Düse ausgetragen wird, welche eine Temperatur von ≤ 250 °C aufweist.

### Beispiele

Die vorliegende Erfindung wird anhand der nachfolgenden Beispiele weiter erläutert, ohne jedoch darauf beschränkt zu sein. Die Abkürzungen haben die nachfolgenden Bedeutungen, wobei die Shore-Härten gemäß DIN EN ISO 868 bestimmt wurden.
TPU 1: thermoplastisches Polyurethan vom Typ Desmopan DP 3690 AU, Shore A 93, Shore D 40
TPU 2: thermoplastisches Polyurethan vom Typ Desmopan 9385 A, Shore A 86, Shore D 35
TPU 3: thermoplastisches Polyurethan vom Typ Desmopan DP 3660 DU, Shore A 98, Shore D 62 PLA: Polylactid, Shore D 72

Es wurde ein FDM-Drucker des Typs X400 CE der Firma RepRap mit einem Vulcano-Druckkopf, mit den folgenden Verfahrensbedingungen eingesetzt: Filamentdurchmesser = 2,85 mm, Ablagegeschwindigkeit = 15 mm/s, Druckkopftemperatur = 225 °C, Baumraumtemperatur = 23 °C, Extrusionsdüsen-Durchmesser = 1,2 mm, Schichtdicke: 0,4 mm

Auf diesem FDM-Drucker wurden 30 mm breite, 2 mm dicke und 300 mm lange Prüfkörper aus einem ersten Polymer gedruckt. Auf den so hergestellten Prüfkörper wurde, nachdem die Oberfläche für 15 Minuten auf Raumtemperatur abgekühlt wurde, ein gleicher Prüfkörper aus einem zweiten Polymer aufgedruckt, wobei die letzten 50 mm des unteren Prüfkörpers durch ein Blatt Papier so abgedeckt wurden, das ein 50 mm langes, nicht kontaktiertes Areal gebildet wurde.

Die verbundenen Prüfkörper aus dem Polymer 1 und dem Polymer 2 wurden in eine Zugmaschine eingespannt und in einen 180° Schälversuch auf Adhäsionsfestigkeit geprüft. Die Bedingungen waren: Probenbreite 30 mm, Vorkraft 0 N, Geschwindigkeit bis Vorkraft 20 mm/min, Vorwegstrecke 50 mm, Prüfstrecke 50 mm, Prüfgeschwindigkeit 100 mm/min, gemessen wurde die maximale Abzugskraft (N/mm) und mittlere Abzugskraft (N/mm).

Die Ergebnisse sind in der nachfolgenden Tabelle wiedergeben. "E" bedeutet ein erfindungsgemäßes Beispiel, "V" ein Vergleichsbeispiel.

| Polymer 1 / Polymer 2 | Maximale Abzugskraft [N/mm] | Mittlere Abzugskraft [N/mm] |
|---|---|---|
| TPU 1 / TPU 1 (V) | 13,4 | 12,7 |
| TPU 2 / TPU 2 (V) | 9,1 | 8,4 |
| TPU 3 / TPU 3 (V) | 13,3 | 12,5 |
| PLA / PLA (V)* | 7,2 | 6,6 |
| TPU 1 / TPU 2 (E) | 9,1 | 8,1 |
| TPU 3 / TPU 1 (E) | 9,7 | 9,3 |
| TPU 3 / TPU 2 (E) | 10,5 | 9,5 |
| PLA / TPU 1 (V) | 2,4 | 2,1 |
| PLA / TPU 3 (V) | 0,1 | 0,1 |

*: zum Prüfen des PLA-Prüfkörpers musste dieser auf 80 °C erwärmt werden, um vor dem Schälversuch die Prüfschenkel auf 180° für die Prüfmaschine auszurichten und in einem 180° Schälversuch geprüft werden zu können.

Es ist deutlich zu sehen, dass mit den erfindungsgemäßen Kombinationen von TPU-Materialien mit unterschiedlichen Härten, welche bei vergleichbaren Bedingungen bei < 250 °C wie oben beschrieben über 3D Druck in marktüblichen 3D-FDM-Druckern verarbeitet werden, eine hervorragende Interlagenhaftung nicht nur bei gleichen Materialien sondern überraschend auch bei signifikant unterschiedlichen TPU Materialien erreicht wird.

Eine visuelle Inspektion ergab, dass die nach dem erfindungsgemäßen Verfahren hergestellten Probenkörper keine glatten Abrissoberflächen aufwiesen. Vielmehr wurden Erhebungen und komplementäre Vertiefungen beobachtet, welche auf ein Kohäsionsversagen und nicht nur auf Adhäsionsversagen hindeuten.

Besonders überraschend ist, dass diese gute Haftung sogar auf abgekühlten Oberflächen erreicht wird. Das erlaubt eine sehr robuste und einfache Prozessführung zum Erhalt von Hochleistungs-Schicht- und Gradientenmaterialien mittels 3D-Druck.

## Patentansprüche

1. Verfahren zur Herstellung eines Gegenstandes in einem additiven Fertigungsverfahren mit Lagen aus unterschiedlichen Materialien, umfassend die Schritte:
I) Bereitstellen eines zumindest teilweise auf eine Temperatur oberhalb seiner Glasübergangstemperatur erwärmten Aufbaumaterials auf einen Träger, so dass eine Lage des Aufbaumaterials erhalten wird, welche einem ersten ausgewählten Querschnitt des Gegenstands entspricht;
II) Bereitstellen eines zumindest teilweise auf eine Temperatur oberhalb seiner Glasübergangstemperatur erwärmten Aufbaumaterials auf eine zuvor bereitgestellte Lage des Aufbaumaterials, so dass eine weitere Lage des Aufbaumaterials erhalten wird, welche einem weiteren ausgewählten Querschnitt des Gegenstands entspricht und welche mit der zuvor bereitgestellten Lage verbunden ist;
III) Wiederholen des Schritts II), bis der Gegenstand gebildet ist;
wobei in Schritten I) und II) das Bereitstellen eines zumindest teilweise auf eine Temperatur oberhalb seiner Glasübergangstemperatur erwärmten Aufbaumaterials durch Auftragen eines Filaments eines zumindest teilweise auf eine Temperatur oberhalb seiner Glasübergangstemperatur erwärmten Aufbaumaterials erfolgt,
wobei in den einzelnen Schritten II) das Aufbaumaterial jeweils aus einem ein thermoplastisches Polyurethan-Polymer enthaltenden ersten Aufbaumaterial oder einem hiervon verschiedenen, ein thermoplastisches Polyurethan-Polymer enthaltenden zweiten Aufbaumaterial ausgewählt ist,
wobei wenigstens einmal Schritt II) mit dem ersten Aufbaumaterial durchgeführt wird und wenigstens einmal Schritt II) mit dem zweiten Aufbaumaterial durchgeführt wird,
wobei das erste und das zweite Aufbaumaterial sich voneinander durch ihre Shore-Härte gemäß DIN ISO 7619-1 unterscheiden und
wobei die Differenz der Shore-Härten gemäß DIN ISO 7619-1 zwischen erstem und zweitem Aufbaumaterial ≥ 5A bis ≤ 55A und/oder ≥ 5D bis ≤ 40D beträgt.

2. Verfahren gemäß Anspruch 1, **dadurch gekennzeichnet, dass** das erste und das zweite Aufbaumaterial sich voneinander durch ihre Reißdehnung gemäß DIN 53504, 200 mm/min, unterscheiden.

3. Verfahren gemäß Anspruch 2, **dadurch gekennzeichnet, dass** die Differenz der Reißdehnungen gemäß DIN 53504, 200 mm/min, zwischen erstem und zweitem Aufbaumaterial ≥ 50 Prozentpunkte bis ≤ 700 Prozentpunkte beträgt.

4. Verfahren gemäß einem der Ansprüche 1 bis 3, **dadurch gekennzeichnet, dass** die Herstellung des Gegenstands mittels des additiven Fertigungsverfahrens die Schritte umfasst:
- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

5. Verfahren gemäß einem der Ansprüche 1 bis 4, **dadurch gekennzeichnet, dass** wenigstens eines der eingesetzten Aufbaumaterialien ein thermoplastisches Polyurethan-Elastomer ist.

6. Verfahren gemäß einem der Ansprüche 1 bis 5, **dadurch gekennzeichnet, dass** wenigstens eines der eingesetzten Aufbaumaterialien ein thermoplastisches Polyurethan-Elastomer umfasst, das erhältlich ist aus der Reaktion einer Polyisocyanatkomponente und einer Polyolkomponente, wobei die Polyolkomponente ein Polyesterpolyol umfasst, welches einen Stockpunkt gemäß ASTM D5985 von ≥ 25 °C bis ≤ 100 °C aufweist.

7. Verfahren gemäß einem der Ansprüche 1 bis 6, **dadurch gekennzeichnet, dass** wenigstens eines der eingesetzten Aufbaumaterialien ein thermoplastisches Polyurethan-Polymer umfasst, welches aus der Reaktion einer Diphenylmethandiisocyanat und/oder dessen NCO-terminiertes Reaktionsprodukt mit einem Polyol enthaltenden NCO-Komponente und einer 1,4-Butandiol enthaltenden Polyolkomponente erhalten wurde.

8. Verfahren gemäß einem der Ansprüche 1 bis 7, **dadurch gekennzeichnet, dass** wenigstens eines der eingesetzten Aufbaumaterialien ein thermoplastisches Polyurethan-Polymer umfasst, welches aus der Reaktion einer 1,6-Hexamethylendiisocyanat enthaltenden NCO-Komponente und/oder dessen NCO-terminiertes Reaktionsprodukt mit einem Polyol und einer 1,4-Butandiol und/oder 1,6-Hexandiol enthaltenden Polyolkomponente erhalten wurde.

9. Verfahren gemäß einem der Ansprüche 1 bis 8, **dadurch gekennzeichnet, dass** das Verfahren in einer Kammer durchgeführt wird und dass die Temperatur innerhalb der Kammer ≤ 50 °C beträgt.

10. Verfahren gemäß einem der Ansprüche 1 bis 9, **dadurch gekennzeichnet, dass** wenigstens eines der eingesetzten Aufbaumaterialien durch eine Düse ausgetragen wird, welche eine Temperatur von ≤ 250 °C aufweist.

## Claims

1. Process for producing an article in an additive manufacturing method with layers of different materials, comprising the steps of:
I) providing a build material heated at least partly to a temperature above its glass transition temperature on a carrier, such that a layer of the build material is obtained, corresponding to a first selected cross section of the article;
II) providing a build material heated at least partly to a temperature above its glass transition temperature on a previously provided layer of the build material, such that a further layer of the build material is obtained, corresponding to a further selected cross section of the article and bonded to the previously provided layer;
III) repeating step II) until the article is formed; wherein, in steps I) and II), the providing of a build material heated at least partly to a temperature above its glass transition temperature is effected by applying a filament of a build material heated at least partly to a temperature above its glass transition temperature,
wherein
the build material in each of the individual steps II) is selected from a first build material containing a thermoplastic polyurethane polymer or a second build material different therefrom that contains a thermoplastic polyurethane polymer, wherein
step II) is conducted at least once with the first build material and
step II) is conducted at least once with the second build material,
wherein the first and second build material differ from one another by their Shore hardness to DIN ISO 7619-1 and
wherein the difference in Shore hardnesses to DIN ISO 7619-1 between the first and second build material is ≥ 5A to ≤ 55A and/or ≥ 5D to ≤ 40D.

2. Process according to Claim 1, **characterized in that** the first and second build material differ from one another by their elongation at break to DIN 53504, 200 mm/min.

3. Process according to Claim 2, **characterized in that** the difference in elongations at break to DIN 53504, 200 mm/min, between the first and second build material is ≥ 50 percentage points to ≤ 700 percentage points.

4. Process according to any of Claims 1 to 3, **characterized in that** the production of the article by means of the additive manufacturing method comprises the steps of:
- applying a filament of an at least partially molten build material to a carrier, such that a layer of the build material is obtained, corresponding to a first selected cross section of the article;
- applying a filament of the at least partially molten build material to a previously applied layer of the build material to obtain a further layer of the build material which corresponds to a further selected cross section of the article and which is joined to the previously applied layer;
- repeating the step of applying a filament of the at least partially molten build material onto a previously applied layer of the build material until the article has been formed.

5. Process according to any of Claims 1 to 4, **characterized in that** at least one of the build materials used is a thermoplastic polyurethane elastomer.

6. Process according to any of Claims 1 to 5, **characterized in that** at least one of the build materials used comprises a thermoplastic polyurethane elastomer obtainable from the reaction of a polyisocyanate component and a polyol component, wherein the polyol component comprises a polyester polyol having a no-flow point to ASTM D5985 of ≥ 25°C to ≤ 100°C.

7. Process according to any of Claims 1 to 6, **characterized in that** at least one of the build materials used comprises a thermoplastic polyurethane polymer that has been obtained from the reaction of a diphenylmethane diisocyanate and/or the NCO-terminated reaction product thereof with a polyol-containing NCO component and a butane-1,4-diol-containing polyol component.

8. Process according to any of Claims 1 to 7, **characterized in that** at least one of the build materials used comprises a thermoplastic polyurethane polymer that has been obtained from the reaction of a hexamethylene 1,6-diisocyanate-containing NCO component and/or the NCO-terminated reaction product thereof with a polyol and a butane-1,4-diol- and/or hexane-1,6-diol-containing polyol component.

9. Process according to any of Claims 1 to 8, **characterized in that** the process is conducted in a chamber and **in that** the temperature within the chamber is ≤ 50°C.

10. Process according to any of Claims 1 to 9, **characterized in that** at least one of the build materials used is discharged through a nozzle having a temperature of ≤ 250°C.

## Revendications

1. Procédé de fabrication d'un objet dans un procédé de production additive comportant des couches de différents matériaux, comprenant les étapes :
I) fourniture d'un matériau de construction, au moins partiellement chauffé à une température supérieure à sa température de transition vitreuse, sur un support de façon à obtenir une couche du matériau de construction, qui correspond à une première section transversale sélectionnée de l'objet ;
II) fourniture d'un matériau de construction, au moins partiellement chauffé à une température supérieure à sa température de transition vitreuse, sur une couche préalablement fournie du matériau de construction, de façon à obtenir une couche supplémentaire du matériau de construction, qui correspond à une autre section transversale sélectionnée de l'objet, qui est assemblée à la couche préalablement fournie ;
III) répétition de l'étape II) jusqu'à formation de l'objet ;
dans lequel, dans les étapes I) et II), la fourniture d'un matériau de construction, au moins partiellement chauffé à une température supérieure à sa température de transition vitreuse, s'effectue par application d'un filament d'un matériau de construction au moins partiellement chauffé à une température supérieure à sa température de transition vitreuse,
dans chacune des étapes II), le matériau de construction étant choisi entre un premier matériau de construction contenant un polymère de polyuréthane thermoplastique ou un second matériau de construction différent du précédent, contenant un polymère de polyuréthane thermoplastique,
l'étape II) étant au moins une fois mise en œuvre avec le premier matériau de construction et
l'étape II) étant au moins une fois mise en œuvre avec le second matériau de construction,
le premier et le second matériau de construction différant l'un de l'autre par leur dureté Shore selon DIN ISO 7619-1, et
la différence des duretés Shore selon DIN ISO 7619-1 entre le premier et le second matériau de construction étant ≥ 5A jusqu'à ≤ 55A et/ou ≥ 5D jusqu'à ≤ 40D.

2. Procédé selon la revendication 1, **caractérisé en ce que** le premier et le second matériau de construction diffèrent l'un de l'autre par leur allongement à la rupture selon DIN 53504, de 200 mm/minute.

3. Procédé selon la revendication 2, **caractérisé en ce que** la différence des allongements à la rupture selon DIN 53504, 200 mm/minute, entre le premier et le second matériau de construction, est ≥ 50 points de pourcentage jusqu'à ≤ 700 points de pourcentage.

4. Procédé selon l'une des revendications 1 à 3, **caractérisé en ce que** la fabrication de l'objet par le procédé de production additive comprend les étapes :
- application d'un filament d'un matériau de construction au moins partiellement fondu sur un support, de façon à obtenir une couche du matériau de construction qui correspond à une première section transversale sélectionnée de l'objet ;
- application d'un filament du matériau de construction au moins partiellement fondu sur une couche préalablement appliquée du matériau de construction, de façon à obtenir une couche supplémentaire du matériau de construction, qui correspond à une section transversale sélectionnée supplémentaire de l'objet et qui est assemblée à la couche préalablement appliquée ;
- répétition de l'étape d'application d'un filament du matériau de construction au moins partiellement fondu sur une couche préalablement appliquée du matériau de construction, jusqu'à formation de l'objet.

5. Procédé selon l'une des revendications 1 à 4, **caractérisé en ce qu'**au moins l'un des matériaux de construction utilisés est un élastomère de polyuréthane thermoplastique.

6. Procédé selon l'une des revendications 1 à 5, **caractérisé en ce qu'**au moins l'un des matériaux de construction utilisés comprend un élastomère de polyuréthane thermoplastique, qui peut être obtenu par la réaction d'un composant polyisocyanate et d'un composant polyol, le composant polyol comprenant un polyesterpolyol, qui présente une température de fusion selon ASTM D5985 ≥ 25 °C jusqu'à ≤ 100 °C.

7. Procédé selon l'une des revendications 1 à 6, **caractérisé en ce qu'**au moins l'un des matériaux de construction utilisés comprend un polymère de polyuréthane thermoplastique, qui a été obtenu par la réaction d'un diisocyanate de diphénylméthane et/ou d'un produit de réaction à terminaison NCO de ce dernier, avec un composant NCO contenant un polyol et un composant polyol contenant du 1,4-butanediol.

8. Procédé selon l'une des revendications 1 à 7, **caractérisé en ce qu'**au moins l'un des matériaux de construction utilisés comprend un polymère de polyuréthane thermoplastique, qui a été obtenu par la réaction d'un composant NCO contenant du diisocyanate de 1,6-hexaméthylène et/ou d'un produit de réaction à terminaison NCO de ce dernier, avec un polyol et un composant polyol contenant du 1,4-butanediol et/ou du 1,6-hexanediol.

9. Procédé selon l'une des revendications 1 à 8, **caractérisé en ce qu'**il est mis en œuvre dans un compartiment, et que la température à l'intérieur du compartiment est ≤ 50 °C.

10. Procédé selon l'une des revendications 1 à 9, **caractérisé en ce qu'**au moins l'un des matériaux de construction utilisé est appliqué par une buse, qui présente une température ≤ 250 °C.
